# EUROPÄISCHE PATENTSCHRIFT

(11) **EP 2 367 266 B1**
(45) Veröffentlichungstag und Bekanntmachung des Hinweises auf die Patenterteilung: **05.06.2019**
(21) Anmeldenummer: 11154329.4
(22) Anmeldetag: 14.02.2011
(51) Int. Cl.: H02K 3/52, H02K 5/22, B60K 6/26

(54) **Antriebseinheit für ein Kraftfahrzeug mit einer elektrischen Maschine**
Drive unit for a motor vehicle with an electric machine
Unité d'entraînement pour un véhicule automobile doté d'une machine électrique

(30) Priorität: 17.03.2010 DE 102010002944
(43) Veröffentlichungstag der Anmeldung: 21.09.2011
(73) Patentinhaber: ZF Friedrichshafen AG, 88046 Friedrichshafen (DE)
(72) Erfinder: Markow, Alexander, 97424, Schweinfurt (DE); Zimmer, Manfred, 97437, Haßfurt (DE)

(56) Entgegenhaltungen:
- US-A- 4 387 313
- US-A1- 2007 296 290
- US-A1- 2009 251 018
- US-B2- 6 707 185

## Beschreibung

Die vorliegende Erfindung betrifft eine Antriebseinheit für ein Kraftfahrzeug mit einer elektrischen Maschine gemäß dem Oberbegriff von Patentanspruch 1.

Eine Antriebseinheit ist beispielsweise aus der EP 1 067 003 B1 bekannt geworden. Üblicherweise werden die elektrische Maschine und die weiteren, die Antriebseinheit bildenden Komponenten, wie z.B. ein Verbrennungsmotor, eine Kupplung und ein Getriebe als einzelne Module bereitgestellt und bei einem Fahrzeughersteller zu einer gemeinsamen Einheit verbunden. Die elektrische Maschine umfasst dabei zumindest den Rotor, den Stator, gegebenenfalls ein den Stator tragendes und diesen und den Rotor umschließendes Gehäuseelement und auch eine Anschlussvorrichtung, mit der die Statorwicklung mit einer Stromquelle verbunden werden kann. Es ist hierbei, wie in der genannten Patentschrift dargestellt, gängige Praxis, die Anschlussvorrichtung an dem vorstehend erwähnten Gehäuseelement festzulegen. Dazu ist in diesem Gehäuseelement eine Öffnung zur Anordnung eines Schaltkastens vorgesehen, welcher die Öffnung durchdringt und der innerhalb des Gehäuses einen gewissen radialen Bauraum beansprucht, welcher zur Ausbildung des Stators und/oder des Rotors nicht zur Verfügung steht. Des Weiteren erfordert eine derart ausgebildete Anschlussvorrichtung besondere Maßnahmen zu deren Abdichtung, um insbesondere einen Eintritt von Wasser und Feuchte in das unmittelbar benachbarte Maschineninnere und damit eine Beschädigung von Komponenten und den Ausfall der elektrischen Maschine zu vermeiden.

Mit der US 2009/251018 A1 ist eine gattungsgemäße Antriebseinheit für ein Hybrid- oder Elektrofahrzeug bekannt geworden mit einer elektrischen Maschine, welche in einer ersten Kammer angeordnet ist und deren Statorwicklung mit einer in einer zweiten Kammer befindlichen Anschlussvorrichtung verbunden ist. Dabei ist die zweite Kammer radial außerhalb der ersten Kammer angeordnet. An der Statorwicklung vorgesehene Statorkontakte erstrecken sich innerhalb der ersten Kammer radial über den Stator hinaus und stehen zur axialen Verbindung mit elektrischen Verbindungsanschlüssen der Anschlussvorrichtung bereit, wobei die Verbindungsanschlüsse in einer zwischen der ersten und der zweiten Kammer ausgebildeten Zwischenwand festgelegt sind und axial in diese Kammern hinein reichen. Die elektrische Verbindung der Verbindungsanschlüsse mit den Statorkontakten und mit Sammelschienen sind jeweils als Schraubverbindungen ausgeführt, wobei zum Anschluss der elektrischen Maschine jeweils eine der Kammern von einer Stirnseite zugänglich sein muss. Insgesamt erfordert die erläuterte Antriebseinheit zur Verbindung der elektrischen Maschine mit der Anschlussvorrichtung einen dafür vorzuhaltenden axialen und radialen Bauraum, welcher bei derartigen Antriebseinheiten in einem Fahrzeug grundsätzlich knapp bemessen ist.

Die ebenfalls gattungsgemäße US 2007/296290 A1 offenbart eine Antriebseinheit in Form eines Elektromotormoduls für ein Hybridfahrzeug mit einer in einem Gehäuse eingesetzten elektrischen Maschine. Gemäß einer dort erläuterten Ausführungsform sind die mit der Statorwicklung verbundenen Statorkontakte als axial abstehende Bolzen ausgeführt. Zur Ausbildung einer Anschlussvorrichtung der elektrischen Maschine ist am äußeren Umfang des Gehäuses eine Ausnehmung eingebracht, in welche ein Anschlussblock radial eingeführt und dort festgelegt werden kann. Der Anschlussblock weist einerseits zu den Statorkontakten korrespondierende Kontaktelemente zur Ausbildung einer Steckverbindung auf und andererseits weitere Kontaktelemente zum Anschluss externer Leiter, welche mit einer Energiequelle verbindbar sind. Der erläuterte Anschlussblock bedingt somit eine übermäßige axiale Verlängerung des Gehäuses, welches somit axial im gesamten Querschnitt gegenüber dem Stator vergrößert ist.

Von dem genannten Stand der Technik ausgehend, stellt sich die Erfindung die Aufgabe, eine Antriebseinheit für ein Kraftfahrzeug mit einer elektrischen Maschine gemäß dem Oberbegriff von Patentanspruch 1 dahingehend zu verbessern, dass einerseits die räumliche, insbesondere die radiale Erstreckung von Rotor und Stator in einem vorgegebenen Bauraum optimiert werden und dass andererseits die Anschlussvorrichtung für die elektrische Maschine verbessert wird.

Die Aufgabe wird durch eine Antriebseinheit mit den in Patentanspruch 1 angegebenen Merkmalen gelöst. Eine vorteilhafte Weiterbildung der Erfindung ist im abhängigen Anspruch angegeben.

Es wird mit der Erfindung eine Antriebseinheit für ein Kraftfahrzeug mit einer elektrische Maschine vorgeschlagen, welche einen um eine Achse A drehbar gelagerten Rotor umfasst, der mit einer auf die Fahrzeugräder wirkenden Antriebswelle koppelbar oder gekoppelt ist. Die elektrische Maschine umfasst weiter einen Stator mit einer elektrischen Wicklung, deren Wicklungsenden mittels einer an einer Gehäuseöffnung der Antriebseinheit angeordneten oder durch diese hindurchgeführten Anschlussvorrichtung mit einer Stromquelle verbindbar sind. Des Weiteren umfasst die elektrische Maschine ein den Rotor und den Stator radial außen umgebendes Gehäuseelement. Die Wicklungsenden des Stators sind mit ersten Kontaktelementen verbunden, welche lagefixiert am Stator angeordnet und bezüglich der elektrischen Maschine als Axialverbinder ausgeführt sind und die Statorkontakte darstellen. Die ersten Kontaktelemente sind mit zweiten Kontaktelementen verbindbar oder verbunden, welche korrespondierend zu den ersten Kontaktelementen ausgebildet und an einem Wandbereich der Antriebseinheit angeordnet sind und die Wandkontakte darstellen und wobei die Wandkontakte mit der Anschlussvorrichtung elektrisch verbunden sind oder diese ausbilden.

Ein Kerngedanke der Erfindung besteht darin, die elektrische Maschine mit deren Rotor und deren Stator getrennt von deren Anschlussvorrichtung zur Stromversorgung auszubilden. Zu diesem Zweck wird die elektrische Verbindung zwischen der Wicklung bzw. zwischen dem Stator und der Anschlussvorrichtung zumindest zweiteilig ausgeführt und zwar mit einem ersten Verbindungsabschnitt von der Statorwicklung zu den Statorkontakten und mit einem zweiten Verbindungsabschnitt von den Wandkontakten zu der Anschlussvorrichtung. Dabei sind die Statorkontakte und die Wandkontakte als Axialverbindungselemente ausgeführt und bilden gemeinsam eine Steckverbindung aus. Des Weiteren sind die Statorkontakte und die Wandkontakte innerhalb der radialen Erstreckung von Rotor und Stator angeordnet. Insbesondere ist die Verbindung zur blinden und werkzeugfreien Montage der Elektromaschine ausgebildet.

Gemäß einem weiteren Merkmal der Erfindung ist der Wandbereich zur Anordnung der zweiten Kontaktelemente an einem Gehäuse eines Gangwechselgetriebes ausgebildet, welcher sich im Wesentlichen radial zu der Achse A erstreckt. Die elektrische Maschine kann somit innerhalb einer Kupplungs- oder Wandlerglocke eines Gangwechselgetriebes angeordnet sein. Die Wandkontakte können bei Bedarf mittels Dichtmitteln in der Wandung festgelegt sein, so dass beispielsweise zu einer Anschlussvorrichtung geführte Leiterelemente in einem Getriebe-Ölbad angeordnet sein können.

Gemäß einem weiteren Merkmal der Antriebseinheit sind die Wandkontakte mittels Stromschienen mit der Anschlussvorrichtung elektrisch verbunden, wobei die Stromschienen vor äußeren Einflüssen geschützt innerhalb eines von einem Gehäuse gebildeten Aufnahmeraumes für die Zahnräder des Gangwechselgetriebes angeordnet sind. Dieser zweite Verbindungsabschnitt kann prinzipiell entweder vor oder auch nach der Montage der Elektromaschine an der Antriebseinheit an dem Wandbereich angeordnet bzw. verlegt sein, wobei hier eine günstige Position zur Festlegung der Anschlussvorrichtung ausgewählt werden kann.

Es ist demnach nicht zwingend notwendig, dass sich die Anschlussvorrichtung axial im Bereich der Elektromaschine erstreckt oder dort angeordnet ist. Insbesondere kann vorgesehen sein, die Anschlussvorrichtung an einem anderen, nicht zur Elektromaschine gehörigen Wandbereich oder Gehäuse festzulegen. Auf diese Weise wird eine, über einen bloßen Zusammenbau hinausgehende Integration der Elektromaschine mit einem Gangwechselgetriebe erreicht. Durch die vorgeschlagene bauliche und räumliche Trennung der Anschlussvorrichtung vom Stator ergibt sich der Vorteil, dass in dem, die Elektromaschine radial umgebenden Gehäuse kein radialer Bauraum für die Anschlussvorrichtung vorgehalten werden muss. Vielmehr können Rotor und Stator das Gehäuse nun vollständig einnehmen, d.h. den zur Verfügung stehenden Bauraum bestmöglich ausnutzen. Die Anschlussvorrichtung kann damit prinzipiell an eine beliebige Position und räumlich in einen bauraumgünstigen Abschnitt der Antriebseinheit verlegt werden.

Bei der Montage der Antriebseinheit wird die elektrische Maschine axial mit dem den Wandbereich mit den Wandkontakten umfassenden Gangwechselgetriebe zusammengeführt, wobei die Stator-Kontakte und die Wand-Kontakte verbunden werden.

Die Anschlussvorrichtung kann auch an einem radialen Wandabschnitt festgelegt werden, wobei eine Abdichtung in einer planaren Fläche einfacher und sicherer zu realisieren ist. Die Anschlussvorrichtung kann bevorzugt einen antriebsseitig fest montierten Schaltkasten oder ein Steckverbindungselement umfassen oder einfach auch als ein aus einem Gehäuse herausgeführtes Anschlusskabel ausgeführt sein.

Mit Vorteil kann die Gehäuseöffnung der Anschlussvorrichtung an dem Wandbereich des Wandkontaktes oder an dem Gehäuse ausgeführt sein. Für die Verbindung der Wandkontakte mit der Anschlussvorrichtung kann generell jegliche Leiterart verwendet werden. In einer besonders Platz sparenden Weise sind die Verbindungen als Stromschienen, insbesondere mit Flachleitern ausgeführt, die sehr nahe an der Wandung geführt und dort festlegbar sind.

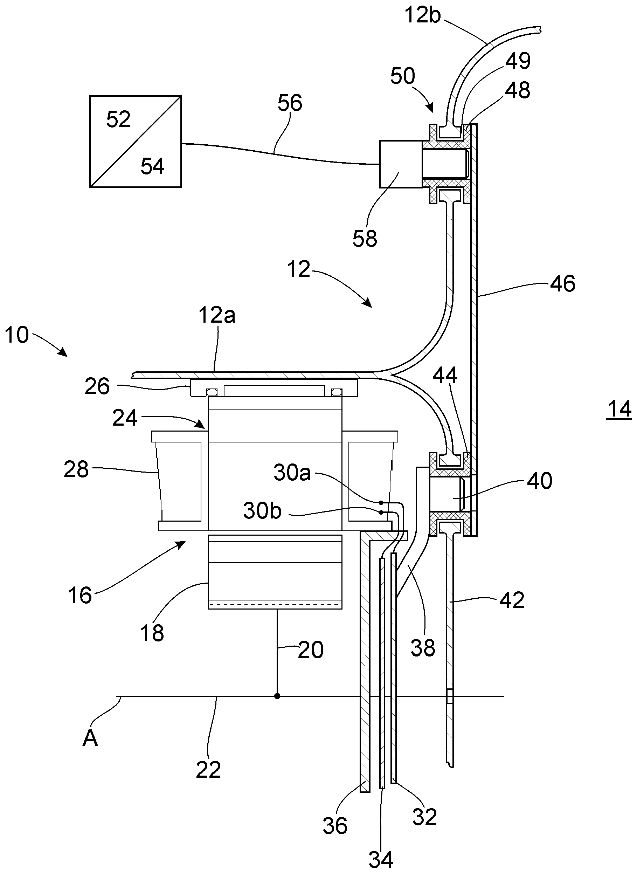

Nachfolgend wird die Erfindung anhand der beigefügten Figur beispielhaft erläutert. Die Figur zeigt eine vereinfachte und teilweise schematisierte Darstellung einer Antriebseinheit 10 für ein Hybrid-Fahrzeug mit einer elektrischen Maschine 16. Diese ist innerhalb eines in dessen Gesamtheit mit Bezugsziffer 12 bezeichneten Gehäuses angeordnet, insbesondere innerhalb einer Gehäuseglocke eines Gangwechselgetriebes 14, welche ein erstes Gehäuseelement 12a darstellt. Die Elektromaschine 16 ist im vorliegenden Ausführungsbeispiel als permanenterregte Synchronmaschine ausgeführt und umfasst einen um eine Achse A drehbar gelagerten, innenlaufenden Rotor 18, dessen Träger 20 mit einer Eingangswelle 22 des Gangwechselgetriebes 14 drehverbunden ist und der damit ein Drehmoment auf zeichnerisch nicht dargestellte Fahrzeugräder abgeben kann. Der Rotor 18 ist radial von einem Stator 24 umgeben, welcher mittels eines fluidgekühlten Statorträgers 26 an der die elektrische Maschine 16 außen umgebenden Gehäuseglocke 12a festgelegt ist. Der Stator 24 weist in bekannter Weise eine elektrische Wicklung 28 in Form von Einzelspulen auf, deren Wicklungsenden 30a, b in einer vorbestimmten Art und Weise entsprechend der Phasenanzahl und der gewählten Verschaltungsart mittels konzentrisch zum Stator 24 angeordneten Ringleitern 32, 34 verbunden sind, von denen lediglich zwei dargestellt sind. Die Ringleiter 32, 34 sind in der Figur an der zum Getriebe 14 gerichteten Stirnseite der elektrischen Maschine 16 innerhalb eines Trägerelementes 36 isoliert angeordnet, wie dieses beispielsweise in der EP 1 705 776 B1 beschrieben und dargestellt ist und weisen damit verbundene oder integral mit diesen ausgebildete erste Kontaktelemente auf. In der Figur ist vereinfacht lediglich ein einziges dieser ersten Kontaktelemente 38 oder Statorkontakte dargestellt, welches zur Ermöglichung einer axialen Kontaktierung bzw. Verbindung in Form eines sich in Axialrichtung zum Getriebe 14 erstreckenden Anschlussbolzens 40 ausgebildet ist bzw. diesen aufweist. Die weiteren, hier nicht dargestellten Anschlussbolzen können dazu radial oder in Umfangsrichtung gestaffelt angeordnet sein, wobei alle Anschlussbolzen am Stator 24 lagefixiert sind und vorteilhafterweise in einer gemeinsamen Radialebene liegen.

Es ist in der Figur erkennbar, dass der Anschlussbolzen 40 in einen sich im Wesentlichen radial erstreckenden Getriebewandbereich 42 eindringt, der das erste Gehäuseelement 12a von einem die Zahnradanordnung des Getriebes 14 aufnehmenden zweiten Gehäuseelement 12b trennt. In diesem Getriebewandbereich 42 sind zu den ersten Kontaktelementen 38 korrespondierende und gegenüber dem Wandbereich 42 elektrisch isolierte zweite Kontaktelemente 44 in Form von Anschlusshülsen angeordnet, von denen wiederum nur eine einzige zeichnerisch dargestellt ist. Die weiteren Anschlusshülsen sind korrespondierend zu den weiteren Kontaktbolzen angeordnet. Durch diese axiale Anordnung kann die elektrische Maschine 16, insbesondere deren Stator 24 axial in den Innenraum des ersten Gehäuseelements 12a eingeführt werden, wobei gleichzeitig deren Statorkontakte 38, 40 eine Steckverbindung mit den Wandkontakten 44 eingehen, wie dieses in der Figur sichtbar ist. Die Wandkontakte 44 sind jeweils mit Stromschienen 46 verbunden, die im Inneren des Gangwechselgetriebes verlegt sind und die mit deren Endbereichen mit weiteren gleichfalls hülsenförmigen Wandkontakten 48 verbunden sind, welche an einer oder mehreren Gehäuseöffnungen 49 des zweiten Gehäuseelements 12b angeordnet ist bzw. sind. Diese Wandkontakte 48 bilden einen Teil einer Anschlussvorrichtung 50 zur Verbindung der elektrischen Maschine 16 mit einer von einer Stromquelle bzw. einem Energiespeicher 52 gespeisten Leistungselektronik 54 zu deren Ansteuerung. Das zwischen der Leistungselektronik 54 und der Anschlussvorrichtung 50 verlegte Anschlusskabel 56 weist dazu Steckkontakte, insbesondere Kontaktbolzen 58 auf, die mit den Wandkontakten 48 der Anschlussvorrichtung 50 verbunden werden.

### Bezugszeichenliste

- 10: Antriebseinheit
- 12: Gehäuse
- 12a: erstes Gehäuseelement
- 12b: zweites Gehäuseelement
- 14: Getriebe
- 16: elektrische Maschine
- 18: Rotor
- 20: Rotorträger
- 22: Eingangswelle
- 24: Stator
- 26: Statorträger
- 28: Wicklung
- 30a, b: Wicklungsenden
- 32, 34: Ringleiter
- 36: Trägerelement
- 38: erstes Kontaktelement, Statorkontakt
- 40: Anschlussbolzen
- 42: Getriebewandbereich
- 44: zweites Kontaktelement, Wandkontakt
- 46: Stromschiene
- 48: Wandkontakt
- 49: Gehäuseöffnung
- 50: Anschlussvorrichtung
- 52: Energiespeicher
- 54: Leistungselektronik
- 56: Anschlusskabel
- 58: Kontaktbolzen

## Patentansprüche

1. Antriebseinheit (10) für ein Kraftfahrzeug mit einer elektrische Maschine (16), welche umfasst
- ein Gangwechselgetriebe (14) mit einem Gehäuse (12)
- einen um eine Achse A drehbar gelagerten Rotor (18), der mit einer auf die Fahrzeugräder wirkenden Antriebswelle (22) gekoppelt ist,
- einen Stator (24) und
- ein den Rotor (18) und den Stator (24) radial außen umgebendes erstes Gehäuseelement (12a), wobei
- der Stator (24) eine elektrische Wicklung (28) aufweist, deren Wicklungsenden (30a, b) mittels einer an einer Gehäuseöffnung (49) der Antriebseinheit (10) angeordneten oder durch diese hindurchgeführten Anschlussvorrichtung (50) mit einer Stromquelle (52) verbunden sind, wobei
- die Wicklungsenden (30a, b) mit ersten Kontaktelementen (38) verbunden sind, welche als Statorkontakte (38) lagefixiert am Stator (24) und innerhalb der radialen Erstreckung von Rotor (18) und Stator (24) angeordnet sind und welche bezüglich der elektrischen Maschine (16) als Axialverbinder (40) ausgeführt sind wobei
- die ersten Kontaktelemente (38) mit zweiten Kontaktelementen (44) verbunden sind, welche korrespondierend zu den ersten Kontaktelementen (38) ausgebildet sind,
**dadurch gekennzeichnet, dass**
- die zweiten Kontaktelemente (44) als Wandkontakte (44) an einem sich im Wesentlichen radial zu der Achse A des Rotors (18) erstreckenden Wandbereich (42) der Antriebseinheit (10) angeordnet sind und wobei
- der Wandbereich (42) an dem Gehäuse (12) des Gangwechselgetriebes (14) ausgebildet ist, wobei
- der Wandbereich das erste Gehäuseelement (12a) von einem die Zahnradanordnung des Getriebes (14) aufnehmenden zweiten Gehäuseelement (12b) trennt und wobei
- die Statorkontakte (38) und die Wandkontakte (44) gemeinsam eine Steckverbindung ausbilden und wobei
- die Wandkontakte (44) mittels Stromschienen (46) mit der Anschlussvorrichtung (50) elektrisch verbunden sind, wobei
- die Stromschienen (46) innerhalb eines von dem Gehäuse (12) gebildeten Aufnahmeraumes für Zahnräder des Gangwechselgetriebes (14) angeordnet sind und wobei
- die Gehäuseöffnung (49) an dem zweiten Gehäuseelement (12b) angeordnet ist.

2. Antriebseinheit nach Anspruch 1, **dadurch gekennzeichnet, dass** die Gehäuseöffnung (49) der Anschlussvorrichtung (50) an dem Wandbereich ausgeführt ist.

## Claims

1. Drive unit (10) for a motor vehicle having an electric machine (16), which comprises
- a gear-change transmission (14) having a housing (12),
- a rotor (18) which is mounted so as to be rotatable about an axis (A) and which is coupled to a drive shaft (22) acting on the vehicle wheels,
- a stator (24), and
- a first housing element (12a) which radially outwardly surrounds the rotor (18) and the stator (24), wherein
- the stator (24) has an electrical winding (28) whose winding ends (30a, b) are connected to a current source (52) by means of a connection device (50) arranged on or guided through a housing opening (49) of the drive unit (10), wherein
- the winding ends (30a, b) are connected to first contact elements (38) which, as stator contacts (38), are arranged in a positionally fixed manner on the stator (24) and within the radial extent of rotor (18) and stator (24) and which are configured as axial connectors (40) with respect to the electric machine (16), wherein
- the first contact elements (38) are connected to second contact elements (44) which are formed in a corresponding manner to the first contact elements (38),
**characterized in that**
- the second contact elements (44) are arranged as wall contacts (44) on a wall region (42) of the drive unit (10) that extends substantially radially to the axis (A) of the rotor (18), and wherein
- the wall region (42) is formed on the housing (12) of the gear-change transmission (14), wherein
- the wall region separates the first housing element (12a) from a second housing element (12b) which receives the gearwheel assembly of the transmission (14), and wherein
- the stator contacts (38) and the wall contacts (44) together form a plug connection, and wherein
- the wall contacts (44) are electrically connected to the connection device (50) by means of busbars (46), wherein
- the busbars (46) are arranged within a receptacle, formed by the housing (12), for gearwheels of the gear-change transmission (14), and wherein
- the housing opening (49) is arranged on the second housing element (12b).

2. Drive unit according to Claim 1, **characterized in that** the housing opening (49) of the connection device (50) is formed on the wall region.

## Revendications

1. Unité d'entraînement (10) pour un véhicule automobile doté d'une machine électrique (16), qui comprend
- une boîte de changement de vitesse (14) avec un boîtier (12),
- un rotor (18) monté de façon rotative autour d'un axe A, qui est couplé à un arbre d'entraînement (22) agissant sur les roues du véhicule,
- un stator (24) et
- un premier élément de boîtier (12a) entourant radialement à l'extérieur le rotor (18) et le stator (24), dans laquelle
- le stator (24) présente un enroulement électrique (28), dont les extrémités de l'enroulement (30a, b) sont reliées à une source de courant (52) au moyen d'un dispositif de raccordement (50) disposé à une ouverture de boîtier (49) de l'unité d'entraînement (10) ou mené à travers celle-ci, dans laquelle
- les extrémités (30a, b) de l'enroulement sont reliées à des premiers éléments de contact (38), qui sont fixés sur le stator (24) en tant que contacts de stator (38) et qui sont disposés à l'intérieur de l'extension radiale du rotor (18) et du stator (24) et qui sont réalisés sous forme de connecteurs axiaux (40) par rapport à la machine électrique (16), dans laquelle
- les premiers éléments de contact (38) sont connectés à des deuxièmes éléments de contact (44), qui sont formés de manière correspondante aux premiers éléments de contact (38),
**caractérisée en ce que**
- les deuxièmes éléments de contact (44) sont disposés en tant que contacts de paroi (44) sur une région de paroi (42) de l'unité d'entraînement (10) qui s'étend essentiellement radialement par rapport à l'axe A du rotor (18), et dans laquelle
- la région de paroi (42) est formée sur le boîtier (12) de la boîte de changement de vitesse (14), dans laquelle
- la région de paroi sépare le premier élément de boîtier (12a) d'un deuxième élément de boîtier (12b) contenant l'agencement de roues dentées de la boîte de vitesses (14), et dans laquelle
- les contacts de stator (38) et les contacts de paroi (44) forment ensemble une liaison par fiches, et dans laquelle
- les contacts de paroi (44) sont reliés électriquement au dispositif de raccordement (50) au moyen de rails de contact (46), dans laquelle
- les rails de contact (46) sont disposés à l'intérieur d'une chambre de réception formée par le boîtier (12) pour les roues dentées de la boîte de changement de vitesse (14), et dans laquelle
- l'ouverture de boîtier (49) est disposée sur le deuxième élément de boîtier (12b).

2. Unité d'entraînement selon la revendication 1, **caractérisée en ce que** l'ouverture de boîtier (49) du dispositif de raccordement (50) est formée dans la région de paroi.
